(19) Europäisches Patentamt
European Patent Office
Office européen des brevets

(11) EP 2 466 433 A2

(12) **EUROPEAN PATENT APPLICATION**

(43) Date of publication:
**20.06.2012 Bulletin 2012/25**

(51) Int Cl.:
***G06F 3/044*** *(2006.01)*

(21) Application number: **11193459.2**

(22) Date of filing: **14.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2010 JP 2010278861**

(71) Applicant: **SMK Corporation**
**Tokyo 142-8511 (JP)**

(72) Inventor: **Nambu, Mototoshi**
**Shinagawa-ku, Tokyo 142-8511 (JP)**

(74) Representative: **Thompson, Andrew John et al**
**Withers & Rogers LLP**
**4 More London Riverside**
**London**
**SE1 2AU (GB)**

(54) **Capacitive touch panel**

(57) A capacitive touch panel that detects an input position accurately with a limited number of sensing electrodes is provided. First and second sensing electrodes adjacent to each other in a detecting direction are arranged such that among a plurality of branch patterns of the first sensing electrode a branch pattern closer to the second sensing electrode, and among a plurality of branch patterns of the second sensing electrode a branch pattern closer to the first sensing electrode are alternately arranged in the detecting direction. The widths in the detecting direction of the plurality of branch patterns of each sensing electrode are set such that the branch patterns on the opposite sides in the detecting direction have the smallest width, and the width of a branch pattern gradually becomes greater as the branch pattern gets closer to a branch pattern at the center.

FIG. 2
X
3
3
3
Ex1
E'x2
Ex3
E'x4
ex (-1)
ex (-2)
ex(0)
ex(n)
e x'(n)
ex (+1)
ex (+2)
ex' (0)
ex (0)
ex' (-2)
ex' (-1)
e x'(0)
ex' (+1)
ex' (+2)
C2
C1
Px
C(Ex1)
C(E'x2)
C(Ex3)
Px1
C(E'x4)

EP 2 466 433 A2

## Description

### TECHNICAL FIELD

The present invention relates to a capacitive touch panel that detects a sensing electrode to increase in stray capacitance in response to an input unit to make an input approaching the sensing electrode, and detects an input position on the basis of the location of the sensing electrode.

### BACKGROUND ART

A capacitive touch panel is known as one of pointing devices for designating an item such as an icon displayed on a display of an electronic device, and making an input of the designated item. The capacitive touch panel detects an input position on an entry screen on the basis of the change of an electrostatic capacitance caused in response to an input unit such as a finger approaching a sensing electrode on the entry screen.

An example of a conventional capacitive touch panel is described in Japanese Patent Application Laid-Open No. 2009-175784. It includes a large number of electrodes disposed on an insulating substrate and isolated from each other. An electrode increased in stray capacitance in response to an input unit such as a finger approaching the electrode is detected. Then, it is determined that an input was made at a position corresponding to the location of the electrode, thereby detecting the input position on an entry screen on the insulating sub strate.

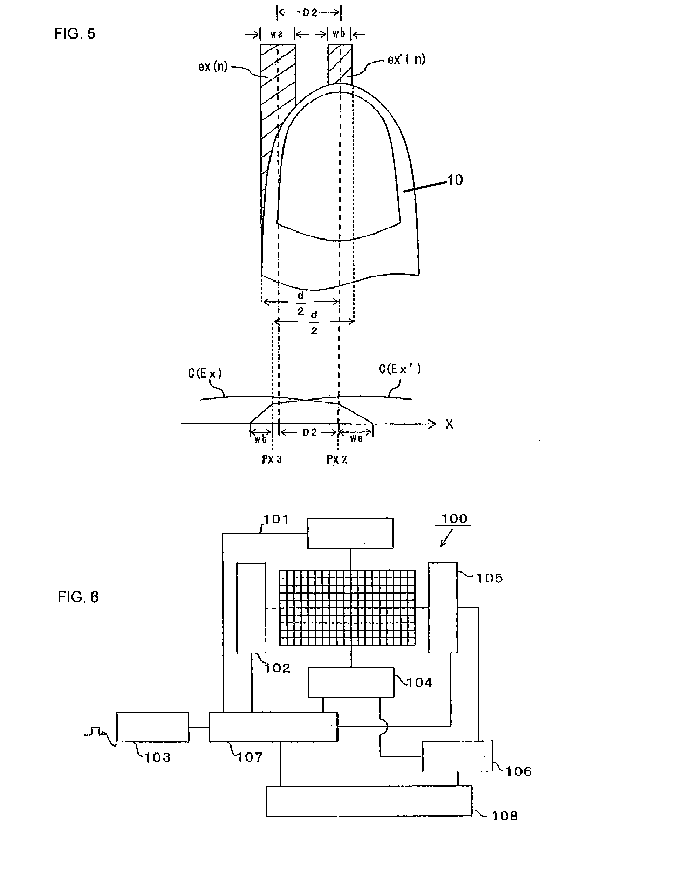

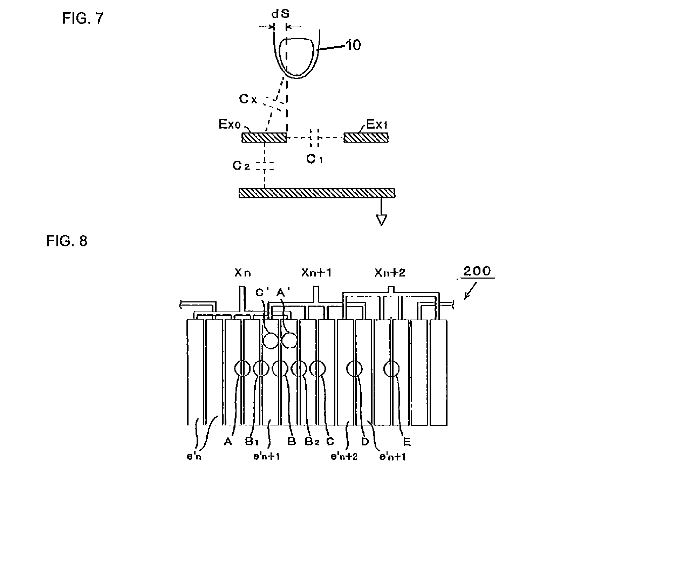

A capacitive touch panel 100 disclosed in Japanese Patent Application Laid-Open No. 2009-175784 will be described next by referring to Figs. 6 and 7. The capacitive touch panel 100 uses these principles of detection to detect a two-dimensional input position on the basis of the positions of electrodes increased in stray capacitance that extend in X and Y directions perpendicular to each other. As shown in Fig. 6, in the capacitive touch panel 100, a switching control circuit 107 sequentially switches between an X-axis input switch 101 connected to a large number of X electrodes, and a Y-axis input switch 102 connected to a large number of Y electrodes. An oscillating circuit 103 applies a certain pulse voltage to the large number of X and Y electrodes for scanning. In the meantime, switches 104 and 105 are selected in turn to connect the sides of the electrodes opposite to those to which the pulse voltage was applied to an operating circuit 106, thereby reading the potentials of the opposite sides.

A stray capacitance between an electrode and an input unit such as a finger is increased if the input unit approaches the electrode. Thus, part of a current caused to flow in an electrode in response to application of a pulse voltage flows through the stray capacitance, so that the potential of the opposite side detected by the operating circuit 106 is made lower than that detected before the input unit approaches the electrode. A large number of X electrodes and a large number of Y electrodes are arranged in a matrix on the insulating substrate. Accordingly, the opposite side of at least one of the X electrodes arranged in the Y direction, and the opposite side of at least one of the Y electrodes arranged in the X direction are reduced in potential when the input unit is approaching the insulating substrate. The operating circuit 106 detects an input position represented by XY-coordinate on the basis of the locations of the X and Y electrodes reduced in potential, and outputs the input position to a control circuit 108.

A stray capacitance Cx of a sensing electrode Ex0 to increase in response to an input unit 10 approaching the sensing electrode Cx is equal to or less than 10 pF that is considerably smaller than an electrostatic capacitance C1 between the sensing electrode Ex0 and a sensing electrode Ex1 adjacent to the sensing electrode Ex0, or an electrostatic capacitance C2 between the sensing electrode Ex0 and a surrounding dielectric substance such as an insulating substrate. In addition, the stray capacitance Cx is proportionate to an area dS of the input unit 10 facing a sensing electrode Ex. Accordingly, increase of the stray capacitance Cx is significantly reduced as the input unit 10 deviates from the position immediately above the sensing electrode Ex, making it difficult to detect an input position.

An input position may be detected with higher accuracy by making a pitch between the sensing electrodes Ex smaller to dispose a larger number of sensing electrodes Ex in a detecting direction. However, the increased number of sensing electrodes Ex arranged on the insulating substrate increases the frequencies of switching between the switches 101, 102, 104 and 105, leading to a longer time of detection and increased size of a circuit component.

Meanwhile, a capacitive touch panel 200 shown in Fig. 8 has been proposed in Japanese Patent Application Laid-Open No. 2010-39515. The capacitive touch panel 200 includes sensing electrodes Xn each of which is divided into a plurality of branch electrodes en'. The branch electrodes en' and branch electrodes en+1' of a sensing electrode Xn+1 adjacent to the sensing electrode Xn are alternately arranged in a detecting direction (horizontal direction of the drawing).

For the sake of simplicity of the description, it is assumed that the electrostatic capacitance of a specific sensing electrode Xn is increased by one, where circles of Fig. 8 each show an area in which an input unit faces a sensing electrode, and the input unit faces the sensing electrode Xn with half of this area. In this case, the sensing electrodes Xn, Xn+1 and Xn+2 arranged in an input direction in which input positions A to E are arranged are increased in electrostatic capacitance in the manner shown in Table 1.

Table 1

| | A | B | C | D | E |
|---|---|---|---|---|---|
| Xn | 2 | 1 | 0 | 0 | 0 |
| Xn+1 | 0 | 1 | 2 | 1 | 0 |
| Xn+2 | 0 | 0 | 0 | 1 | 2 |

The aforementioned alternate arrangement of the branch electrodes en' and en+1' in the input direction makes it possible to detect an input position between the sensing electrodes Xn and Xn+1 adjacent to each other on the basis of the increases of the electrostatic capacitances of the sensing electrodes Xn and Xn+1 as shown in Table 1. This realizes detection with accuracy twice the accuracy achieved in the case where the sensing electrodes Xn are simply arranged in the input direction. The alternate arrangement can achieve the same accuracy by reducing by half the number of sensing electrodes Xn to shorten a scanning time, and can reduce the entire circuit component accordingly.

The conventional capacitive touch panel 100 involves increase of the number of sensing electrodes in order to detect an input position with higher accuracy, or to enlarge an entry screen. Resultant size increase of a circuit component and a lengthened time of detection impose limits on the enhancement of detection accuracy and size increase of touch panels.

This problem may be solved by the conventional capacitive touch panel 200 in which the sensing electrode Xn is divided into the plurality of branch electrodes en'. However, the capacitive touch panel 200 detects an increase of an electrostatic capacitance when an input unit faces a position B1 or B2 where the increase is the same increase of an electrostatic capacitance detected when the input unit faces a position B, for example. This means that detection accuracy can be enhanced only to a limited level even if the number of branch electrodes en' formed by dividing the sensing electrode Xn is increased.

Next, inputs made by an input unit at positions C' and A' of Fig. 8 will be compared. The input made at the position C' that is on the left side of the position A' in the detecting direction increases the electrostatic capacitance of the sensing electrode Xn+1 on the right side of the sensing electrode Xn. This may cause false detection of an input position depending on the size of the input unit or the location of the input position.

The alternate arrangement of the branch electrodes en' and en+1' of the sensing electrodes Xn and Xn+1 adjacent to each other in the detecting direction involves isolation and crossing of lead wires pulled out of the branch electrodes en' and en+1'. This generates new capacitive components at the crossings, leading to a fear of false detection and complicated wiring.

## SUMMARY OF THE INVENTION

The present invention has been made to respond to the aforementioned conventional problems. It is an object of the present invention to provide a capacitive touch panel that detects an input position accurately with a limited number of sensing electrodes.

It is also an object of the invention to provide a capacitive touch panel with alternative arrangement of branch patterns of adjacent sensing electrodes, in which the capacitive touch panel reduces false detection by avoiding generation of a capacitive component due to crossing of lead wires.

A capacitive touch panel according to a first aspect of the present invention can detect the change of a stray capacitance of each of a plurality of sensing electrodes spaced a predetermined distance in a detecting direction of an input position on an insulating substrate, and detect the position of an input made by an input unit on the basis of the location of a sensing electrode on the insulating substrate that is changed in stray capacitance in response to the input unit approaching the sensing electrode. Each sensing electrode is divided into a plurality of branch patterns extending like comb teeth in a direction perpendicular to the detecting direction. First and second sensing electrodes adjacent to each other in the detecting direction are arranged such that among a plurality of branch patterns of the first sensing electrode a branch pattern closer to the second sensing electrode, and among a plurality of branch patterns of the second sensing electrode a branch pattern closer to the first sensing electrode are alternately arranged in the detecting direction. Widths in the detecting direction of the plurality of branch patterns of each sensing electrode are formed such that the branch patterns on the opposite sides in the detecting direction have the smallest width, and the width of a branch pattern gradually becomes greater as the branch pattern gets closer to a branch pattern at the center.

The widths in the detecting direction of a plurality of branch patterns of each sensing electrode are configured such that the branch patterns on the opposite sides in the detecting direction have the smallest width, and the width of a branch pattern gradually becomes greater as the branch pattern gets closer to a branch pattern at the center. Accordingly, the stray capacitance of a sensing electrode to increase in response to the input unit facing the sensing electrode is at its maximum value if an input position is at the position of the branch pattern at the center. The stray capacitance is reduced in response to reduction of an area in which the input unit faces a branch pattern that is caused by the branch pattern getting farther to either side of the detecting direction from the branch pattern at the center.

The respective branch patterns of the first and second sensing electrodes are alternately arranged in the detecting direction. Accordingly, if the input unit faces both of the alternately arranged branch patterns, the stray capacitances of the first and second sensing electrodes become lower according to distances in the detecting direction between the respective branch patterns at the centers and the input position. Accordingly, by making a comparison between increases of the stray capacitances of the first and second sensing electrodes adjacent to each other, the input position between the sensing electrodes can be detected accurately.

In the capacitive touch panel according to a second aspect, the first and second sensing electrodes are divided at opposite sides of a direction perpendicular to the detecting direction into branch patterns such that the respective branch patterns of the first and second sensing electrodes interlock with each other. The second sensing electrode is pulled out through the branch pattern at the center of the second sensing electrode to the same direction to which the first sensing electrode is pulled out.

The first and second sensing electrodes adjacent to each other are divided at opposite sides of a direction perpendicular to the detecting direction into branch patterns, so that the respective branch patterns of the first and second sensing electrodes are alternately arranged in the detecting direction. This alternate arrangement still allows the second sensing electrode to be pulled out through the branch pattern at the center of the second sensing electrode to the same direction to which the first sensing electrode is pulled out. Thus, the second sensing electrode can be pulled out to the direction to which the first sensing electrode is pulled out without crossing the branch patterns of the first sensing electrode.

In the capacitive touch panel according to a third aspect, the insulating substrate has a front surface on which a plurality of X sensing electrodes are disposed that define an X direction as the detecting direction, and a rear surface on which a plurality of Y sensing electrodes are disposed that define a Y direction perpendicular to the X direction as the detecting direction.

Detecting X and Y sensing electrodes increased in stray capacitance allows detection of a two-dimensional input position.

In the capacitive touch panel according to a fourth aspect, a distance D1 between the respective branch patterns alternately arranged of the first and second sensing electrodes is equal to or less than (d + wb)/2, where wb is a smaller width in the detecting direction of a branch pattern of either the first or second sensing electrode adjacent to each other, and d is a width in the detecting direction of the input unit.

The input unit faces the respective branch patterns alternately arranged of the first and second sensing electrodes regardless of the position of an input made by the input unit having the width d in the detecting direction if the distance D1 between branch patterns is equal to or less than (d + wb)/2. This causes both the stray capacitances of the first and second sensing electrodes to increase, and these increases are compared to complementarily detect an input position between the first and second sensing electrodes.

In the capacitive touch panel according to a fifth aspect, a distance D2 between the respective branch patterns alternately arranged of the first and second sensing electrodes is equal to or less than (d - wa)/2, where wa is a greater width in the detecting direction of a branch pattern of either the first or second sensing electrode adjacent to each other, and d is the width in the detecting direction of the input unit.

The input unit faces the branch patterns alternately arranged of the first and second sensing electrodes over the entire width in the detection direction regardless of the position of an input made by the input unit having the width d in the detecting direction if the distance D2 between branch patterns is equal to or lower than (d - wa)/2. This causes both the stray capacitances of the first and second sensing electrodes to increase, and these increases are compared to complementarily detect an input position between the first and second sensing electrodes.

The invention according to the first aspect complementarily detects the change of a stray capacitance between sensing electrodes. This allows accurate detection of an input position with a limited number of sensing electrodes, and an input position can be detected in a short time. Further, the size of a circuit per unit area on an entry screen is not increased, so that the entry screen of the touch panel can be enlarged with the same detecting resolution.

The invention according to the second aspect prevents generation of a capacitive component due to crossing of lead wires even if adjacent sensing electrodes the branch patterns of which are alternately arranged are pulled out to the same direction. This reduces false detection of an input position.

Further, a process of isolating lead wires from each other that extend from branch patterns, and making the lead wires cross each other is not required. All sensing electrodes can be pulled out to one side of a direction perpendicular to the detecting direction, thereby making interconnection easy.

The invention according to the third aspect allows accurate detection of an input position on a plane with a limited number of sensing electrodes.

The invention according to the fourth aspect causes the input unit to face all branch patterns of adjacent sensing electrodes regardless of an input position. This increases both the stray capacitances of the adjacent sensing electrodes, so that an input position between the sensing electrodes can be detected.

The invention according to the fifth aspect causes the input unit to face the entire widths of branch patterns of adjacent sensing electrodes regardless of an input position. This reliably increases both the stray capacitances of the adjacent sensing electrodes, so that an input position between the sensing electrodes can be detected accurately.

## BRIEF DESCRIPTION OF THE DRAWINGS

Fig. 1 is an exploded perspective view of a capacitive touch panel 1 according to an embodiment of the invention;
Fig. 2 is a schematic diagram showing a relationship between an input position Px in the X direction of an input unit 10, and changes of stray capacitances of X sensing electrodes Ex and Ex';
Fig. 3 is an explanatory diagram showing an upper limit for a distance D1 between adjacent branch patterns ex(n) and ex'(n) of X sensing electrodes Ex and Ex' in relation to a width d in the X direction of the input unit 10;
Fig. 4 is an explanatory diagram showing a relationship between a position Px of an input made at a branch pattern ex(n) of an X sensing electrode Ex and a branch pattern ex'(n) of an X sensing electrode Ex' adjacent to the X sensing electrode Ex, and changes of stray capacitances of the X sensing electrodes Ex and Ex';
Fig. 5 is an explanatory diagram showing an upper limit for a distance D2 between adjacent branch patterns ex(n) and ex'(n) in relation to a width d in the X direction of the input unit 10;
Fig. 6 is a block diagram of a conventional capacitive touch panel 100;
Fig. 7 is an explanatory diagram showing electrostatic capacitances generated in electrodes of the capacitive touch panel 100; and
Fig. 8 is a plan view of principal part of a capacitive touch panel 200.

## DETAILED DESCRIPTION OF THE PREFERRED EMBODIMENTS

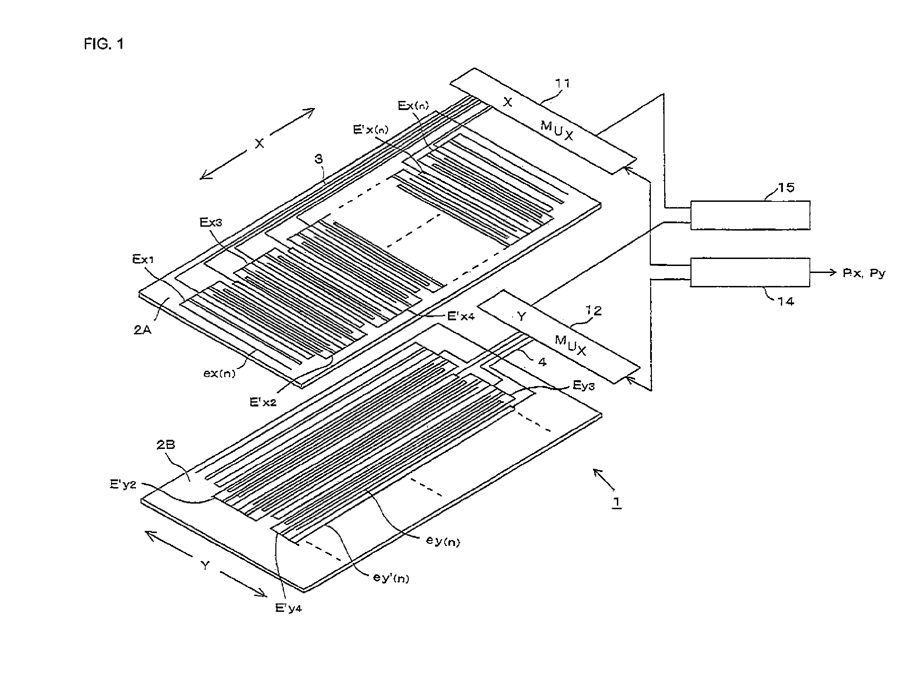

A capacitive touch panel 1 according to an embodiment of the invention will be described below with reference to Figs. 1 to 5. When an input unit 10 such as a finger approaches a position on the capacitive touch panel 1, the capacitive touch panel 1 detects this position as an input position (Px, Py) in X and Y directions perpendicular to each other. As shown in Fig. 1, the capacitive touch panel 1 includes an insulating substrate 2A on which twenty nine (29) X sensing electrodes Ex and twenty nine (29) sensing electrodes Ex' are arranged in the X direction with a predetermined pitch on a surface of the insulating substrate 2A, and an insulating substrate 2B on which sixteen (16) Y sensing electrodes Ey and sixteen (16) Y sensing electrodes Ey' are arranged in a predetermined pitch on a surface of the insulating substrate 2B. The insulating substrates 2A and 2B are stacked one above the other.

Various materials such as flexible plastic sheets made of polyethylene terephthalate (PET) or polyimide may be employed to form the two insulating substrates 2A and 2B that allow the insulating substrates 2A and 2B to hold the conductive sensing electrodes Ex, Ex', Ey and Ey' on their surfaces. In the embodiment, transparent tempered glass substrates are employed such that a display device arranged on the rear side can be seen visually from an entry screen.

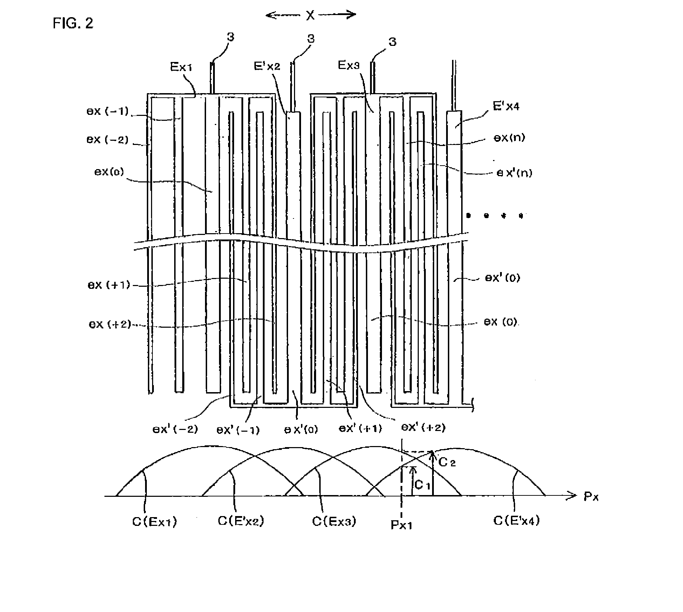

As shown in an enlarged view of Fig. 2, an odd-numbered X sensing electrode Ex and an even-numbered X sensing electrode Ex' as viewed from one side of the X direction include five branch patterns ex(n) and five branch patterns ex'(n), respectively (n is -2, -1, 0, +1, and +2) extending in the Y direction, and which are equally spaced in the X direction. The odd-numbered X sensing electrode Ex is divided at one side of the Y direction (upper side of Fig. 2) into five branch patterns ex(n) with a branch pattern ex(0) at the center. The even-numbered X sensing electrode Ex' is divided at the opposite side of the Y direction into five branch patterns ex'(n) with a branch pattern ex'(0) at the center.

The five branch patterns ex(n) and the five branch patterns ex'(n) are both formed into symmetric combs with respect to the branch patterns ex(0) and ex'(0) at the centers, respectively. The branch patterns ex(n) and ex'(n) have widths in the X direction corresponding to a detecting direction that gradually become smaller as the branch patterns ex (n) and ex'(n) go farther from the branch patterns ex(0) and ex'(0) at the centers, respectively. To be specific, supposing that the widths in the X direction of the branch patterns ex(n) and ex'(n) are w(n) and w'(n), respectively, the following relationships are established:

$$w(-2) = w(+2) \text{ ш } w(-1) = w(+1) \text{ ш } w(0)$$

$$w'(-2) = w'(+2) \text{ ш } w'(-1) = w'(+1) \text{ ш } w'(0).$$

Further, as shown in Figs. 1 and 2, the X sensing electrodes Ex and Ex' adjacent to each other in the X direction are arranged such that their respective branch patterns ex(n) and ex'(n) interlock with each other with an insulating gap left therebetween. To be specific, branch patterns ex(-2) and ex(-1) of an X sensing electrode Ex are disposed between branch patterns ex'(0) and ex'(+1), and between branch patterns ex'(+1) and ex'(+2) of an X sensing electrode Ex' on the left side of the X sensing electrode Ex in Fig. 2, respectively. A branch pattern ex(0) of the X sensing electrode Ex is disposed between a branch pattern ex(+2) of the X sensing electrode Ex' on the left side of the X sensing electrode Ex and a branch pattern ex(-2) of an X sensing electrode Ex' on the right side of the X sensing electrode Ex. Branch patterns ex(+1) and ex(+2) of the X sensing electrode Ex are disposed between branch patterns ex'(-2) and ex'(-1), and between branch patterns ex'(-1) and ex'(0) of the X sensing electrode Ex' on the right side of the X sensing electrode Ex, respectively. Accordingly, a branch pattern ex'(n) of an even-numbered X sensing electrode Ex' is also disposed between branch patterns ex(n) of odd-numbered X sensing electrodes Ex that are on the opposite sides of the X sensing electrode Ex' in the X direction. A distance D1 or D2 between branch patterns ex(n) and ex'(n) adjacent to each other is described later.

A lead wire 3 is connected to a branch pattern ex(0) at the center of an odd-numbered X sensing electrode Ex. The lead wire 3 extends from one side of the Y direction (upper side of Fig. 2) where the X sensing electrode Ex is divided. The lead wire 3 pulls the X sensing electrode Ex out to an X multiplexer 11 through a lead wire 3 printed on the surface of the insulating substrate 2A. A lead wire 3 is also connected to a branch pattern ex'(0) at the center of an even-numbered X sensing electrode Ex'. The lead wire 3 extends from the same side of the Y direction, and pulls the X sensing electrode Ex' out to the X multiplexer 11 through a lead wire 3 printed on the surface of the insulating substrate 2A.

The insulating substrate 2B includes the 16 Y sensing electrodes Ey and the 16 Y sensing electrodes Ey' on the surface of the insulating substrate 2B that are formed in the substantially same manner as that for forming the X sensing electrodes Ex and Ex', except that the Y sensing electrodes Ey and Ey' are arranged in a direction perpendicular to the direction in which the X sensing electrodes Ex and Ex' are arranged. To be specific, an odd-numbered Y sensing electrode Ey and an even-numbered Y sensing electrode Ey' arranged in the Y direction are also divided at one side and at the opposite side of the X direction into five branch patterns ey(n) and five branch patterns ey'(n), respectively. The five branch patterns ey(n) and the five branch patterns ey'(n) are both formed into symmetric combs with respect to branch patterns ey(0) and ey'(0) at the centers, respectively, and have widths in the Y direction that become smaller as the branch patterns ey(n) and ey'(n) go farther from the branch patterns ey(0) and ey'(0) at the centers, respectively.

Y sensing electrodes Ey and Ey' adjacent to each other in the Y direction are arranged such that their respective branch patterns ey(n) and ey'(n) interlock with each other with an insulating gap left therebetween. Both the Y sensing electrodes Ey and Ey' are pulled out to a Y multiplexor 12 through lead wires 4 connected to the Y sensing electrodes Ey and Ey' on one side of the X direction (upper right side of Fig. 1).

As described above, the insulating substrates 2A and 2B are stacked one above the other. Accordingly, the X sensing electrodes Ex and Ex' on the insulating substrate 2A, and the Y sensing electrodes Ey and Ey' on the insulating substrate 2B are isolated by the insulating substrate 2A. Further, the X sensing electrodes Ex and Ex', and the Y sensing electrodes Ey and Ey' are disposed in a lattice pattern as viewed from above in the vertical direction. The insulating substrate 2A is interposed between the Y sensing electrodes Ey and Ey', and the input unit 10 to make an input from above. Accordingly, in response to the input unit 10 approaching the Y sensing electrodes Ey and Ey', the stray capacitances of the Y sensing electrodes Ey and Ey' change in amounts that are smaller than those of the X sensing electrodes Ex and Ex' if the Y sensing electrodes Ey and Ey' have the same width as that of the X sensing electrodes Ex and Ex'. For this reason, while adjacent branch patterns ey(n) and ey'(n) of Y sensing electrodes Ey and Ey' are spaced by the same distance D1 or D2 as that of X sensing electrodes Ex and Ex', five branch patterns ey(n) and five branch patterns ey'(n) have the widths in the Y direction greater than the corresponding widths of branch patterns ex(n) and ex'(n).

The X sensing electrodes Ex and Ex', the Y sensing electrodes Ey and Ey', and the lead wires 3 and 4 may be made of any conductive materials as long as they can be disposed on the insulating substrates 2A and 2B. In the embodiment, ITO (indium tin oxide) as a transparent conductive material allowing printing wiring on an insulating substrate 2 made of glass is used to form the X sensing electrodes Ex and Ex', the Y sensing electrodes Ey and Ey', and the lead wires 3 and 4.

The X multiplexer 11 connected to the X sensing electrodes Ex and Ex', and the Y multiplexer 12 connected to the Y sensing electrodes Ey and Ey' switch connection of all the sensing electrodes Ex, Ex', Ey and Ey' to a stray capacitance detecting circuit 15 in a given scanning cycle under control of a control circuit 14. The electrostatic capacitance (stray capacitance) of each of the sensing electrodes Ex, Ex', Ey, and Ey' is determined as a relative value by various known detecting means. As an example, such a relative value may be determined by receiving a signal pulse output from the input unit 10 such as a dedicated pen, and by detecting the change of the signal pulse output from a sensing electrode. The stray capacitance detecting circuit 15 according to the embodiment applies a predetermined voltage to the sensing electrode Ex, Ex', Ey or Ey' connected to the stray capacitance detecting circuit 15, and measures a time elapsed for the potential of the connected sensing electrode to reach a reference voltage, thereby determining the electrostatic capacitance of the sensing electrode. The potential of a sensing electrode E increases with a time constant that is proportionate to the stray capacitance C(E) of the sensing electrode E, and a measured elapsed time represents the stray capacitance C(E). Accordingly, the stray capacitance detecting circuit 15 outputs a binary signal obtained by binarization of an elapsed time as a capacitance signal indicating the electrostatic capacitance C(E) of the sensing electrode Ex, Ex', Ey or Ey' connected to the stray capacitance detecting circuit 15 to the control circuit 14.

All the sensing electrodes Ex, Ex', Ey and Ey' are connected sequentially through the X and Y multiplexors 11 and 12 to the stray capacitance detecting circuit 15. The stray capacitance detecting circuit 15 repeats the same measurement to obtain the electrostatic capacitances C(E) of all the sensing electrodes Ex, Ex', Ey and Ey', and outputs the resultant electrostatic capacitances C(E) to the control circuit 14. Accordingly, when an operator's finger (input unit) 10 partially grounded approaches the entry screen (surface of the insulating substrate 2A) of the capacitive touch panel 1, X sensing electrodes Ex and Ex', and Y sensing electrodes Ey and Ey' closer to the input unit 10 are increased in stray capacitance C(E). Then, the control circuit 14 determines an input position (Px, Py) in the X and Y directions on the basis of the locations of the X sensing electrodes Ex and Ex', and the Y sensing electrodes Ey and Ey' on the insulating substrates 2A and 2B, respectively, that are increased in stray capacitance C(E) in one scanning cycle. Then, the control circuit 14 outputs the position to a higher-level microprocessor that controls cursor movement on a display screen and controls the operation of an electronic device, so that predetermined processing is performed according to the input position.

The present invention detects an input made at the locations of X sensing electrodes Ex and Ex', and Y sensing electrodes Ey and Ey'. The invention can also complementarily detect an input position (Px, Py) between sensing electrodes on the opposite sides of the position on the basis of the stray capacitances C(E) of these sensing electrodes. This complementary detection will be described next with reference to Fig. 2 that shows the stray capacitances C(Ex) and C(Ex') of X sensing electrodes Ex and Ex' in relation to an input position (Px) in the X direction.

As already described, x sensing electrodes Ex and Ex' include five branch patterns ex(n) and five branch patterns ex'(n), respectively, equally spaced in the X direction corresponding to the detecting direction. When the input unit 10 of a size covering a plurality of branch patterns ex(n) and ex'(n) approaches sensing electrodes Ex and Ex', the stray capacitances C(Ex) and C(Ex') of the X sensing electrodes Ex and Ex' increase in proportion to the respective sums of areas of branch patterns ex(n) and ex'(n) of the X sensing electrodes Ex and Ex' facing the input unit 10. Meanwhile, regarding the widths in the X direction of branch patterns ex(n) and ex'(n) of X sensing electrodes Ex and Ex', the branch patterns ex(0) and ex'(0) at the centers have the greatest width, and the branch patterns ex(-2) and ex'(+2) on the opposite sides have the smallest width. Accordingly, the stray capacitances C(Ex) and C(Ex') of the X sensing electrodes Ex and Ex' are at their maximum values if the center of the input unit 10 (input position Px) is at the branch patterns ex(0) and ex'(0) at the centers, and are reduced as the center of the input unit 10 goes farther from the centers of the sensing electrodes Ex and Ex'. If the input position Px is such that the input unit 10 does not face any one of the branch patterns ex(n) and ex'(n) of the X sensing electrodes Ex and Ex', the stray capacitances C(Ex) and C(Ex') are at the minimum values that are substantially the same as values obtained when no input is made.

If the size of the input unit 10 is such that the input unit 10 faces a plurality of branch patterns ex(n) of one X sensing electrode Ex, the input unit 10 also faces branch patterns ex'(n) of an adjacent X sensing electrode Ex' that are disposed between the branch patterns ex(n). This also increases the stray capacitance C(Ex') of the adjacent X sensing electrode Ex'. As an example, if the center of the input unit 10 is placed between X sensing electrodes Ex3 and Ex'4 as indicated by an input position Px1 shown in Fig. 2, the stray capacitance C(Ex3) of the X sensing electrode Ex3 is increased to C2, and the stray capacitance C(Ex'4) of the X sensing electrode Ex'4 is increased to C1. The stray capacitance C(Ex3) is reduced further as the input position Px goes farther from the branch pattern ex(0) at the center of the X sensing electrode Ex3. The stray capacitance C(Ex'4) is reduced further as the input position Px goes farther from the branch pattern ex'(0) at the center of the X sensing electrode Ex'4. Then, the control circuit 14 complementarily detects the input position Px1 between the X sensing electrodes Ex3 and Ex'4 on the basis of the detected capacitances C1 and C2.

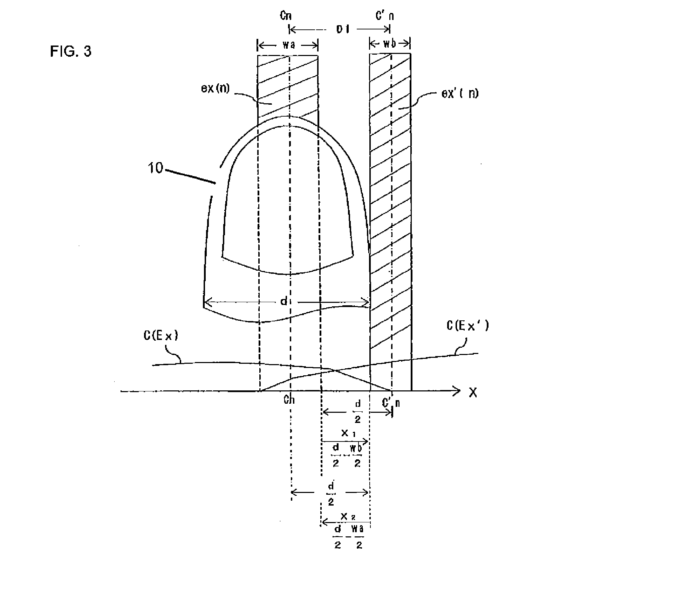

The detection described above is implemented when the size of the input unit 10 is such that the input unit 10 faces a plurality of branch patterns ex(n) of one X sensing electrode Ex. Meanwhile, the input position Px can be detected if the input unit 10 has a width d in the detecting direction that allows the input unit 10 to face one branch pattern ex(n) and one branch pattern ex'(n) adjacent to the branch pattern ex(n) of X sensing electrodes Ex and Ex'. This detection is realized if a condition explained in Fig. 3 for the distance D1 between the branch patterns ex(n) and ex'(n) adjacent to each other in the X direction is satisfied. In Fig. 3, the X direction is defined as a detecting direction, a direction toward the right side of Fig. 3 is defined as +X direction, and a direction toward the left side of Fig. 3 is defined as -X direction. Further, the width in the X direction of the input unit 10 (width in the detecting direction) is defined as d, the width in the X direction of a branch pattern ex(n) of an X sensing electrode Ex is defined as wa, and the width in the X direction of a branch pattern ex'(n) of an X sensing electrode Ex' is defined as wb. The width wa in the X direction of the branch pattern ex(n) is defined to be greater than the width wb in the X direction of the branch pattern ex'(n).

By referring to Fig. 3, attention is given to the positions of the input unit 10 and the left branch pattern ex(n) with respect to each other. An upper limit of the distance D1 between the branch patterns ex(n) and ex'(n) (distance between the center Cn of the branch pattern ex(n) and the center of C'n of the branch pattern ex'(n)) is set such that the input unit 10 contacts the right side of the branch pattern ex(n) when the input unit 10 facing the branch pattern ex (n) moves toward the +X direction to reach the center C'n of the branch pattern ex' (n). Then, the input unit 10 faces the branch pattern ex(n) if the center of the input unit 10 is at any position at least between the centers Cn and C'n. The input unit 10 does not face the branch pattern ex(n) if the center of the input unit 10 is at a position closer to the +X direction than the center C'n. In this case, increase of the stray capacitance C(Ex) is not detected.

A distance $x_1$ between the right side of the branch pattern ex(n) and the left side of the branch pattern ex'(n) is expressed as follows in terms of the distance D1:

$$x_1 = D1 - wa/2 - wb/2.$$

The input unit 10 contacts the right side of the branch pattern ex(n) if the center of the input unit 10 is at the center C'n. The distance $x_1$ is d/2 - wb/2, so that the distance $x_1$ is expressed as follows:

$$x_1 = D1 - wa/2 - wb/2 \leq d/2 - wb/2.$$

As a result, a condition for the distance D1 for allowing the input unit 10 to face the branch pattern ex(n) at a position between the centers Cn and C'n is expressed as follows:

$$D1 \leq d/2 + wa/2 \ldots (1).$$

Next, by referring to Fig. 3, attention is given to the positions of the input unit 10 and the right branch pattern ex'(n) with respect to each other. An upper limit of the distance D1 is set such that the input unit 10 contacts the left side of the branch pattern ex'(n) when the input unit 10 facing the branch pattern ex'(n) moves toward the -X direction to reach the center Cn of the branch pattern ex(n). Then, the input unit 10 faces the branch pattern ex'(n) if the center of the input unit 10 is at any position at least between the centers Cn and C'n. The input unit 10 does not face the branch pattern ex'(n) if the center of the input unit 10 is at a position closer to the -X direction than the center Cn. In this case, increase of the stray capacitance C(Ex') is not detected.

A distance $x_2$ between the right side of the branch pattern ex(n) and the left side of the branch pattern ex'(n) in this state is expressed as follows in terms of the distance D1:

$$x_2 = D1 - wa/2 - wb/2.$$

The input unit 10 contacts the left side of the branch pattern ex'(n) if the center of the input unit 10 is at the center Cn. The distance $x_2$ is d/2 - wa/2, so that the distance $x_2$ is expressed as follows:

$$x_2 = D1 - wa/2 - wb/2 \leq d/2 - wb/2.$$

As a result, a condition for the distance D1 for allowing the input unit 10 to face the branch pattern ex'(n) at a position between the centers Cn and C'n is expressed as follows:

$$D1 \leq d/2 + wb/2 \ldots (2).$$

The width wa in the X direction of the branch pattern ex(n) is greater than the width wb in the X direction of the branch pattern ex'(n). Accordingly, the distance D1 satisfies the condition (1) if it satisfies the condition (2). As understood from the condition (2), as long as the distance D1 is determined to be equal to or less than (d + wb)/2, both the stray capacitances C(Ex) and C(Ex') increase as shown in Fig. 3 if an input position is at any position between the centers Cn and C'n, so that the input position Px can be detected.

It is assumed that an input is made at a position that is out of the range of the distance D1, specifically at a position on the left side of the center Cn of the branch pattern ex(n) or on the right side of the center C'n of the branch pattern ex'(n). In this case, increases of two stray capacitances C(Ex) and C(Ex') can be detected if the distance D1 between different branch patterns ex'(n) and ex(n) adjacent to each other in the same direction satisfies the same condition, so that the input position Px can be detected complementarily.

The aforementioned distance D1 between the branch patterns ex(n) and ex'(n) adjacent to each other is an upper limit defined in order for the input unit 10 the center of which is placed between the centers Cn and C'n to face at least part of the branch pattern ex(n) and part of the branch pattern ex'(n). Meanwhile, a facing area is reduced if the input unit 10 does not face the entire widths in the detecting direction of the branch patterns ex(n) and ex'(n), making it impossible to accurately detect the increases of the stray capacitances C(Ex) and C(Ex'). A distance D2 between branch patterns ex(n) and ex'(n) described below allows the input unit 10 to face both the entire widths in the detecting direction of branch patterns ex(n) and ex'(n) adjacent to each other, which will next be described.

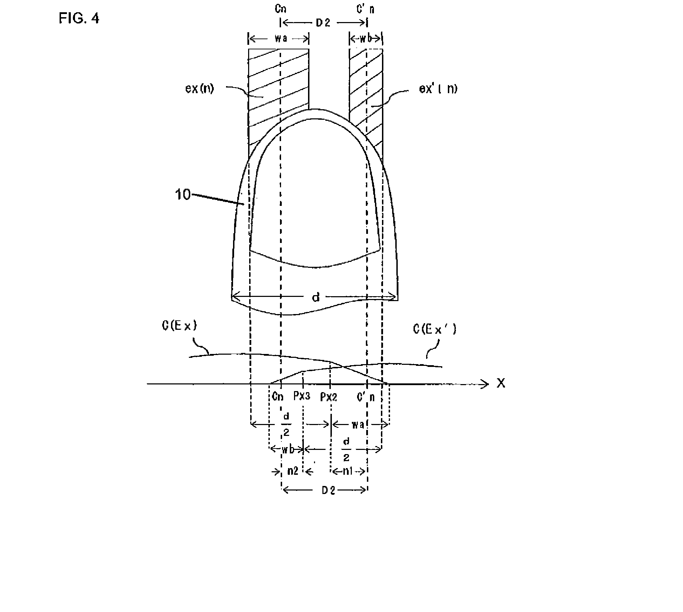

By referring to Fig. 4, attention is given to the positions of the input unit 10 and the left branch pattern ex(n) with respect to each other. The input unit 10 faces the entire width in the X direction of the branch pattern ex(n) if the center of the input unit 10 is placed between the left edge of the branch pattern ex(n) and the input position Px2 spaced by a distance d/2 toward the +X direction from the left edge of the branch pattern ex(n). In this case, the stray capacitance C(Ex) is kept at a fixed detectable level. The input unit 10 faces a smaller width of the branch pattern ex(n) as the input unit 10 goes farther from the input position Px2 toward the +X direction. The increase of the stray capacitance C(Ex) is not detected when the input unit 10 moves toward the +X direction to reach a position spaced from the input position Px2 by a distance wa. Next, attention is given to the positions of the input unit 10 and the right branch pattern ex'(n) with respect to each other. The input unit 10 faces the entire width in the X direction of the branch pattern ex'(n) if the center of the input unit 10 is placed between the right edge of the branch pattern ex'(n) and an input position Px3 spaced by a distance d/2 toward the -X direction from the right edge of the branch pattern ex'(n). In this case, the stray capacitance C(Ex') is kept at a fixed detectable level. The input unit 10 faces a smaller width of the branch pattern ex'(n) as the input unit 10 goes farther from the input position Px3 toward the -X direction. The increase of the stray capacitance C(Ex') is not detected when the input unit 10 moves toward the -X direction to reach a position spaced from the input position Px3 by a distance wb.

Accordingly, in the example shown in Fig. 4, a facing area reducing range n1 or n2 in which increase of either the stray capacitance C(Ex) or C(Ex') is reduced is formed in the distance D2 between the centers Cn and C'n of the branch patterns ex(n) and ex'(n). The input position Px in the X direction cannot be detected in the facing area reducing ranges n1 and n2 on the basis of the increases of the stray capacitances C(Ex) and c(Ex') with respect to each other.

The boundary position Px2 at which the stray capacitance C(Ex) is detectable should be at least closer to the +X direction than the center C'n of the branch pattern ex'(n) (on the right side of the center C'n) in order to avoid formation of the facing area reducing range n1 between the branch patterns ex(n) and ex'(n). The facing area reducing range n1 is not formed if the distance D2 between the centers Cn and C'n is equal to or less than (d - wa)/2. Likewise, the facing area reducing range n2 is not formed if the distance D2 is equal to or less than (d-wb)/2 in order for the boundary position Px3 at which the stray capacitance C(Ex') is detectable to be at least closer to the -X direction than the center Cn of the branch pattern ex(n) (on the left side of the center Cn).

The width wa in the X direction of the branch pattern ex(n) is greater than the width wb in the X direction of the branch pattern ex'(n). Accordingly, the distance D2 satisfies the latter condition if it satisfies the former condition. As understood from the former condition, as long as the distance D2 is determined to be equal to or less than (d - wa)/2, both the stray capacitances C(Ex) and C(Ex') increase at detectable levels as shown in Fig. 5 if an input position is at any position between the centers Cn and C'n, so that the input position Px can be detected.

It is assumed that an input is made at a position that is out of the range of the distance D2, specifically at a position on the left side of the center Cn of the branch pattern ex(n) or on the right side of the center C'n of the branch pattern ex'(n). In this case, increases of two stray capacitances C(Ex) and C(Ex') can be detected if the distance D2 between different branch patterns ex'(n) and ex(n) adjacent to each other in the same direction satisfies the same condition, so that the input position Px can be detected complementarily.

The Y sensing electrodes Ey and Ey' perpendicular to the X sensing electrodes Ex and Ex' are formed on the insulating substrate 2B in the same manner as the X sensing electrodes Ex and Ex' are formed. Accordingly, an input position (Py) in the Y direction is detected in the same manner as the input position (Px) is detected in the X direction. This allows the input position (Px, Py) in the X and Y directions perpendicular to each other to be detected by a limited number of X sensing electrodes Ex and Ex', and Y sensing electrodes Ey and Ey'. Thus, the input position (Px, Py) can be detected quickly even on a large-area entry screen.

In the embodiment, one sensing electrode is divided into five branch patterns. Meanwhile, any number of branch patterns may be employed. Further, a plurality of branch patterns ex(n) and a plurality of branch patterns ex'(n) do not necessarily have symmetric shapes with respect to branch patterns ex(0) and ex'(0) at the centers. X sensing electrodes Ex and Ex' adjacent to each other, or Y sensing electrodes Ey and Ey' adjacent to each other do not necessary have the same number of branch patterns, meaning that respective branch patterns of first and second sensing electrodes adjacent to each other may not alternately be arranged in the entire region of the detecting direction. As an example, supposing that a branch pattern at the center of a specific sensing electrode have the greatest width, the stray capacitance of the sensing electrode is at its maximum value if an input position is at the branch pattern at the center. In this case, the input position can be detected without making a comparison with the stray capacitance of a sensing electrode adjacent to the specific sensing electrode.

Branch patterns of adjacent sensing electrodes may not interlock with each other, but the sensing electrodes may be divided at the same side of a direction perpendicular to the detecting direction.

The embodiment forms a transparent touch panel by using transparent tempered glass substrates as insulating substrates, and by using a transparent conductive material to form sensing electrodes. However, a range of implementation of the invention is not limited to a transparent touch panel. The invention can also be carried out preferably in a printed wiring board with copper-clad opposite surfaces in which X sensing electrodes are placed on one surface while Y sensing electrodes are placed on the other surface.

The invention is suitably applied to a capacitive touch panel that detects an input position based on minute change of the stray capacitance of a sensing electrode caused by an input unit approaching the sensing electrode.

Reference Signs List

| | |
|---|---|
| 1 | Capacitive touch panel |
| 10 | Input unit |
| Ex | Odd-numbered X sensing electrode (First sensing electrode) |
| Ex' | Even-numbered X sensing electrode (Second sensing electrode) |
| Ey | Odd-numbered Y sensing electrode |
| Ey' | Even-numbered Y sensing electrode |
| ex(n) | Branch pattern of X sensing electrode Ex |
| ex'(n) | Branch pattern of X sensing electrode Ex' |
| C(Ex) | Stray capacitance of sensing selectrode Ex |
| C(Ex') | Stray capacitance of sensing selectrode Ex' |
| wa | Width of branch pattern ex(n) in detecting direction (greater width in detecting direction) |
| wb | Width of branch pattern ex'(n) in detecting direction |
| d | Width of input unit 10 in detecting direction |
| D1, D2 | Distance in detecting direction between adjacent brnach patterns ex(n) and ex'(n) |

INCORPORATION BY REFERENCE

All patents, published patent applications, and other references disclosed herein are hereby expressly incorporated by reference in their entireties by reference.

EQUIVALENTS

The functions of several elements may, in alternative embodiments, be carried out by fewer elements, or a single element. Similarly, in some embodiments, any functional element may perform fewer, or different, operations than those described with respect to the illustrated embodiment.

While certain embodiments according to the invention have been described, the invention is not limited to just the described embodiments. Various changes and/or modifications can be made to any of the described embodiments without departing from the spirit or scope of the invention. Also, various combinations of elements, steps, features, and/or aspects of the described embodiments are possible and contemplated even if such combinations are not expressly identified herein.

The invention may be described by reference to the following numbered paragraphs:-

1. A capacitive touch panel for detecting a change of a stray capacitance of each of a plurality of sensing electrodes spaced a predetermined distance in a detecting direction of an input position on an insulating substrate, and detecting a position of an input made by an input unit on the basis of a location of a sensing electrode on the insulating substrate that is changed in stray capacitance in response to the input unit approaching the sensing electrode, wherein:

each sensing electrode is divided into a plurality of branch patterns extending like comb teeth in a direction perpendicular to the detecting direction;
first and second sensing electrodes adjacent to each other in the detecting direction are arranged such that among a plurality of branch patterns of the first sensing electrode a branch pattern closer to the second sensing electrode, and among a plurality of branch patterns of the second sensing electrode a branch pattern closer to the first sensing electrode are alternately arranged in the detecting direction; and
widths in the detecting direction of the plurality of branch patterns of each sensing electrode are formed such that the branch patterns on the opposite sides in the detecting direction have the smallest width, and the width of a branch pattern gradually becomes greater as the branch pattern gets closer to a branch pattern at the center.

2. The capacitive touch panel according to paragraph 1, wherein:

the first and second sensing electrodes are divided at opposite sides of a direction perpendicular to the detecting direction into branch patterns such that the respective branch patterns of the first and second sensing electrodes interlock with each other; and
the second sensing electrode is pulled out through the branch pattern at the center of the second sensing electrode to the same direction to which the first sensing electrode is pulled out.

3. The capacitive touch panel according to paragraph 1, wherein the insulating substrate has a front surface on which a plurality of X sensing electrodes are placed that define an X direction as the detecting direction, and a rear surface on which a plurality of Y sensing electrodes are placed that define a Y direction perpendicular to the X direction as the detecting direction.
4. The capacitive touch panel according to paragraph 1, wherein a distance D1 between the respective branch patterns alternately arranged of the first and second sensing electrodes is equal to or less than (d + wb)/2, where wb is a smaller width in the detecting direction of a branch pattern of either the first or second sensing electrode adjacent to each other, and d is a width in the detecting direction of the input unit.
5. The capacitive touch panel according to paragraph 1, wherein a distance D2 between the respective branch patterns alternately arranged of the first and second sensing electrodes is equal to or less than (d - wa)/2, where wa is a greater width in the detecting direction of a branch pattern of either the first or second sensing electrode adjacent to each other, and d is a width in the detecting direction of the input unit.

## Claims

**1.** A capacitive touch panel for detecting a change of a stray capacitance of each of a plurality of sensing electrodes (Ex, Ex', Ey, Ey') spaced apart by a predetermined distance in a detecting direction of an input position on an insulating substrate (2A, 2B), and detecting a position of an input made by an input unit (10) on the basis of a location of a sensing electrode on the insulating substrate that is changed in stray capacitance in response to the input unit approaching the sensing electrode, wherein:

each sensing electrode is divided into a plurality of branch patterns extending like comb teeth in a direction perpendicular to the detecting direction;
first and second sensing electrodes adjacent to each other in the detecting direction are arranged such that among a plurality of branch patterns of the first sensing electrode a branch pattern closer to the second sensing electrode, and among a plurality of branch patterns of the second sensing electrode a branch pattern closer to the first sensing electrode are alternately arranged in the detecting direction; and
widths in the detecting direction of the plurality of branch patterns of each sensing electrode are formed such that the branch patterns on the opposite sides in the detecting direction have the smallest width, and the width of a branch pattern gradually becomes greater as the branch pattern gets closer to a branch pattern at the center.

**2.** The capacitive touch panel according to claim 1, wherein:

the first and second sensing electrodes are divided at opposite sides of a direction perpendicular to the detecting direction into branch patterns such that the respective branch patterns of the first and second sensing electrodes interlock with each other.

**3.** The capacitive touch panel according to claim 1 or 2, wherein a lead wire (3) of the second sensing electrode is connected to the branch pattern at the center of the second sensing electrode and extends in the same direction as a lead wire (3) connected to the branch pattern at the centre of the first sensing electrode.

**4.** The capacitive touch panel according to any one of the preceding claims, , wherein the insulating substrate has a front surface on which a plurality of X sensing electrodes are placed that define an X direction as the detecting direction, and a rear surface on which a plurality of Y sensing electrodes are placed that define a Y direction perpendicular to the X direction as the detecting direction.

**5.** The capacitive touch panel according to any one of the preceding claims, wherein a distance D1 between the respective branch patterns alternately arranged of the first and second sensing electrodes is equal to or less than (d + wb)/2, where wb is a smaller width in the detecting direction of a branch pattern of either the first or second sensing electrode adjacent to each other, and d is a width in the detecting direction of the input unit.

**6.** The capacitive touch panel according to any one of the claims 1 to 4, wherein a distance D2 between the respective branch patterns alternately arranged of the first and second sensing electrodes is equal to or less than (d - wa)/2, where wa is a greater width in the detecting direction of a branch pattern of either the first or second sensing electrode adjacent to each other, and d is a width in the detecting direction of the input unit.

15
14
Px, Py
11
X MUX
12
Y MUX
4
Ey3
1
Ex(n)
E'x(n)
E'x4
3
X
Ex3
E'x2
ex(n)
Ex1
2A
ey(n)
ey'(n)
E'y4
Y
2B
E'y2


FIG. 1

FIG. 2

X
3
3
3
Ex1
E'x2
Ex3
E'x4
ex (-1)
ex (-2)
ex(0)
ex(n)
ex'(n)
ex (+1)
ex (+2)
ex' (0)
ex (0)
ex' (-2)
ex' (-1)
ex'(0)
ex' (+1)
ex' (+2)
C2
C1
Px
C(Ex1)
C(E'x2)
C(Ex3)
Px1
C(E'x4)

FIG. 3

Cn
C' n
D l
wa
wb
ex(n)
ex'( n)
10
d
C(Ex)
C(Ex')
X
Cn
C' n
d
2
X 1
d wb
2 2
d
2
X 2
d wa
2 2

FIG. 4

Cn
C' n
D2
wa
wb
ex(n)
ex' ( n)
10
d
C(Ex)
C(Ex')
X
Cn
Px3
Px2
C' n
d
2
wa
wb
d
2
n2
n1
D2

FIG. 5

D2
wa
wb
ex(n)
ex'(n)
10
d
2
d
2
C(Ex)
C(Ex')
X
wb
D2
wa
Px3
Px2

FIG. 6

101
100
105
102
104
103
107
106
108

FIG. 7

dS
10
Cx
Ex0
Ex1
C1
C2

FIG. 8

Xn
Xn+1
Xn+2
200
C'
A'
A
B1
B
B2
C
D
E
e'n
e'n+1
e'n+2
e'n+1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009175784 A
- JP 2010039515 A